# FASCICULE DE BREVET EUROPEEN

(11) **EP 4 128 489 B1**
(45) Date de publication et mention de la délivrance du brevet: **01.10.2025**
(21) Numéro de dépôt: 21720801.6
(22) Date de dépôt: 26.03.2021
(51) Int. Cl.: H02K 7/20, H02K 11/21, H02K 7/18

(54) **SYSTÈME D'ACTIONNEMENT POUR UNE POMPE DE LUBRIFICATION D'UN MOTEUR D'AÉRONEF ET AÉRONEF ASSOCIÉ**
BETÄTIGUNGSSYSTEM FÜR EINE FLUGZEUGTRIEBWERKSCHMIERPUMPE UND ZUGEHÖRIGES FLUGZEUG
ACTUATION SYSTEM FOR AN AIRCRAFT ENGINE LUBRICATION PUMP AND ASSOCIATED AIRCRAFT

(30) Priorité: 03.04.2020 FR 2003368
(43) Date de publication de la demande: 08.02.2023
(73) Titulaire: SAFRAN AIRCRAFT ENGINES, 75015 Paris (FR)
(72) Inventeur: DE BLOIS, Nicolas Bertrand Georges, 77550 MOISSY-CRAMAYEL (FR)
(74) Mandataire: Brevalex
(86) Numéro de dépôt international: PCT/FR2021/050531
(87) Numéro de publication internationale: WO 2021/198597

(56) Documents cités:
- EP-A1- 2 141 041
- US-A1- 2018 050 810
- US-A1- 2019 382 121
- US-A1- 2019 382 123

## Description

### DOMAINE TECHNIQUE

La présente invention concerne un système d'actionnement pour une pompe de lubrification d'un moteur d'aéronef.

L'invention concerne également un aéronef embarquant un tel système d'actionnement
L'invention s'applique au domaine de l'aéronautique, en particulier à l'actionnement d'une pompe de lubrification d'un moteur d'un aéronef.

### ÉTAT DE LA TECHNIQUE ANTÉRIEURE

De façon classique, dans des moteurs d'aéronef, en particulier des moteurs de type UHBR (de l'anglais « *ultrahigh bypass ratio* », signifiant à très haut taux de dilution), il est utilisé une pompe de lubrification (dite « pompe de lubrification principale ») chargée d'acheminer de l'huile vers les paliers des arbres haute pression et basse pression, ainsi que vers la boîte de réduction du moteur. Une telle pompe de lubrification est entraînée par l'arbre haute pression au travers d'un boîtier d'accessoires (« *accessory gearbox* », ou AGB, en anglais).

De tels moteurs comprennent, en outre, une pompe de lubrification auxiliaire, entraînée par l'arbre basse pression du moteur, et destinée à assister la pompe de lubrification principale dans les cas où celle-ci n'est plus en mesure d'assurer correctement sa fonction. Une telle situation se produit notamment dans certains cas de la mission de vol où l'arbre haute pression tourne à vitesse faible, voire nulle, la pompe de lubrification principale n'étant alors plus entraînée. De tels cas comprennent, notamment, une extinction du moteur ou une phase d'autorotation de la soufflante du moteur (encore appelée « *windmilling* »), au sol ou en vol.

Toutefois, une telle architecture n'est pas dépourvue d'inconvénients. Par exemple, l'arbre basse pression étant susceptible de tourner dans les deux sens, notamment au sol sous l'effet du vent, il est nécessaire d'utiliser un système d'engrenages avec roue libre pour assurer un seul sens de rotation de la pompe de lubrification auxiliaire.

En outre, s'il est adopté une pompe de lubrification auxiliaire fonctionnant en permanence, il est nécessaire de redimensionner le circuit de lubrification pour tenir compte de l'inclusion de ladite pompe de lubrification auxiliaire. La mise en œuvre d'une pompe de lubrification auxiliaire fonctionnant ponctuellement est également problématique, dans la mesure où une pompe de lubrification auxiliaire débrayable doit être prévue, ce qui accroît la complexité de sa mise en œuvre.

En outre, le positionnement de la pompe de lubrification auxiliaire dans la nacelle est contraint par la cinématique d'entraînement.

Le document US 2018/050810 A1 présente un système de propulsion pour un avion avec un moteur de propulsion électrique et un système de gestion thermique, le système de gestion thermique comprenant un ensemble de circulation d'huile de lubrification et un échangeur de chaleur relié thermiquement à l'ensemble de circulation d'huile de lubrification, l'ensemble de circulation d'huile de lubrification étant configuré pour alimenter le palier en huile de lubrification.

Le document EP 2 141 041 a trait à un système d'entraînement électrique avec un moteur, un générateur, des dispositifs de conversion et un système d'entraînement hybride utilisé conjointement avec le système d'entraînement électrique. Ce document prévoit un système pour assurer une force motrice pendant une panne des dispositifs de conversion et pour obtenir des conditions favorables de consommation de carburant du moteur et des gaz d'échappement pendant l'utilisation dans des situations autres que la panne.

Pour surmonter ces problèmes, il a été proposé d'entraîner la pompe de lubrification auxiliaire, non pas au moyen de l'arbre basse pression, mais grâce à un moteur électrique couplé à ladite pompe de lubrification auxiliaire, et qui est alimenté par un générateur électrique en étant commandé par l'intermédiaire d'un organe électronique de commande dédié comprenant des composants électroniques de puissance.

Néanmoins, une telle solution connue de l'état de l'art ne donne pas entière satisfaction.

En effet, en fonctionnement, l'organe électronique de commande est généralement soumis à des conditions de température susceptibles de causer un endommagement des composants électroniques de puissance qu'il contient, ce qui pose des problèmes de fiabilité. En outre, le renforcement ou l'isolation thermique d'un tel organe électronique de commande se traduit généralement par une augmentation de sa masse et de son encombrement, ce qui, dans le présent contexte, est préjudiciable.

Un but de l'invention est donc de proposer un système d'actionnement pour une pompe de lubrification, en particulier une pompe de lubrification auxiliaire, d'un moteur d'aéronef qui soit fiable et robuste, tout en présentant une masse et un encombrement minimaux.

### EXPOSÉ DE L'INVENTION

A cet effet, l'invention a pour objet un système d'actionnement du type précité et tel que défini à la revendication 1. Ce système comporte une machine électrique tournante génératrice, une machine électrique tournante motrice, un dispositif de commande et une matrice d'interrupteurs,
la machine électrique tournante génératrice comprenant un premier rotor, destiné à être mécaniquement couplé à un arbre du moteur formant un arbre d'entraînement, et un premier stator comprenant au moins un enroulement statorique de sortie,
la machine électrique tournante motrice comprenant un deuxième rotor, destiné à être mécaniquement couplé à la pompe de lubrification pour son actionnement, et un deuxième stator comprenant au moins un enroulement statorique d'entrée,
la matrice d'interrupteurs étant électriquement reliée, d'une part, à l'au moins un enroulement statorique de sortie et, d'autre part, à l'au moins un enroulement statorique d'entrée de façon à électriquement connecter ou déconnecter l'au moins un enroulement statorique de sortie et l'au moins un enroulement statorique d'entrée entre eux en fonction d'un état de la matrice d'interrupteurs,
le dispositif de commande étant configuré pour, en fonction d'un état d'un signal de commande, commander la matrice d'interrupteurs de façon à connecter électriquement ou non l'au moins un enroulement statorique de sortie et l'au moins un enroulement statorique d'entrée entre eux.

Un tel système d'actionnement est dépourvu d'organe électronique de commande susceptible de présenter des dysfonctionnements en raison des conditions de température et de vibration défavorables régnant dans la nacelle. En effet, les tensions délivrées par la génératrice présentent la forme d'onde nécessaire au fonctionnement de la motrice, de sorte que la motrice est susceptible d'être directement entraînée en rotation par lesdites tensions en sortie de la génératrice, sans qu'il ne soit nécessaire d'agencer un organe électronique de mise en forme de tensions, tel qu'un onduleur, entre ces deux machines tournantes. Il en résulte un système d'actionnement pour pompe de lubrification qui est plus fiable et robuste que les systèmes d'actionnement connus, tout en présentant une masse et un encombrement moindres.

Le système d'actionnement selon l'invention présente un autre effet technique particulièrement avantageux.

En effet, sur une pompe de lubrification, le besoin en débit d'huile est proportionnel à la vitesse de rotation des arbres du moteur.

Or, le système d'actionnement selon l'invention est un système linéaire, c'est-à-dire que la vitesse de rotation du premier rotor de la machine électrique tournante motrice est proportionnelle à la vitesse de rotation du deuxième rotor de la machine électrique tournante génératrice. En d'autres termes, dans le système d'actionnement selon l'invention, la tension aux bornes de chaque enroulement de la machine électrique tournante génératrice présente une amplitude et une fréquence qui sont directement fonction de la vitesse de rotation du premier rotor (et donc de l'arbre d'entraînement). Une telle tension, appliquée à chaque enroulement de la machine électrique tournante motrice, se traduit par une vitesse de rotation du deuxième rotor qui est proportionnelle à la vitesse de rotation du premier rotor, et donc à la vitesse de rotation de l'arbre d'entraînement.

Il ressort donc, de ce qui précède, un avantage supplémentaire de l'invention, à savoir que, en fonction de l'arbre d'entraînement auquel est couplé le premier rotor (de préférence, l'arbre basse pression ou un arbre de la soufflante du moteur), et moyennant, éventuellement, au moins un réducteur approprié, la vitesse de rotation à laquelle est entraînée la pompe de lubrification est prévue pour être toujours suffisante vis-à-vis du besoin en débit d'huile requis en fonction de la vitesse de rotation de l'arbre d'entraînement, c'est-à-dire en fonction du régime du moteur. Un organe électronique de commande serait donc superflu.

Suivant l'invention, le dispositif de commande est configuré pour commander la matrice d'interrupteurs, en fonction d'un sens de rotation du premier rotor de la génératrice, afin de connecter l'au moins un enroulement statorique de sortie et l'au moins un enroulement statorique d'entrée entre eux de sorte qu'un sens de rotation du deuxième rotor demeure inchangé, quel que soit le sens dans lequel le premier rotor de la génératrice est entraîné en rotation.

Avantageusement, le dispositif de commande comprend un organe analogique de détection configuré pour délivrer un signal de rotation représentatif du sens de rotation du premier rotor de la génératrice ;
- le dispositif de commande est configuré pour recevoir un signal de commande représentatif de la vitesse de rotation d'un organe rotatif du moteur, de préférence de l'arbre d'entraînement, le dispositif de commande étant, en outre, configuré pour commander la matrice d'interrupteurs afin de connecter électriquement l'au moins un enroulement statorique de sortie et l'au moins un enroulement statorique d'entrée entre eux si la valeur de la vitesse de rotation de l'organe rotatif est inférieure ou égale à un seuil prédéterminé et, de préférence, pour déconnecter électriquement l'au moins un enroulement statorique de sortie et l'au moins un enroulement statorique d'entrée l'un de l'autre si la valeur de la vitesse de rotation de l'organe rotatif est supérieure au seuil prédéterminé ;
- la matrice d'interrupteurs comprend au moins un interrupteur électromécanique ;
- la machine électrique tournante génératrice et/ou la machine électrique tournante motrice est une machine synchrone à aimants permanents ou une machine asynchrone.

En outre, l'invention a pour objet un aéronef embarquant une pompe de lubrification et un système d'actionnement tel que défini ci-dessus, le premier rotor de la machine électrique tournante génératrice étant mécaniquement couplé à un arbre d'un moteur de l'aéronef, le deuxième rotor de la machine électrique tournante motrice étant mécaniquement couplé à une pompe de lubrification du moteur, pour l'actionnement de la pompe de lubrification.

### BRÈVE DESCRIPTION DES DESSINS

L'invention sera mieux comprise à l'aide de la description qui va suivre, donnée uniquement à titre d'exemple non limitatif et faite en se référant au dessin annexé sur lequel :

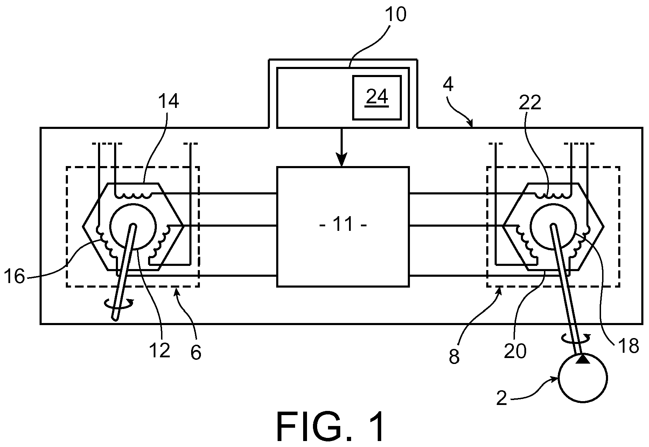

la figure 1 est une représentation schématique d'un système d'actionnement selon l'invention.

### EXPOSÉ DÉTAILLÉ DE MODES DE RÉALISATION PARTICULIERS

Sur la figure 1 sont représentés une pompe de lubrification 2 et un système d'actionnement 4 selon l'invention.

La pompe de lubrification 2 est destinée à alimenter en huile des éléments à lubrifier d'un moteur d'aéronef (non représenté), tels que des paliers ou des boîtes de réduction. La pompe de lubrification 2 est, par exemple, une pompe de lubrification auxiliaire du moteur.

Le système d'actionnement 4 est destiné à prélever de l'énergie au niveau d'un arbre (dit « arbre d'entraînement ») du moteur, et d'utiliser l'énergie prélevée pour actionner la pompe de lubrification 2. L'arbre d'entraînement est, par exemple, l'arbre basse pression du moteur.

Plus précisément, le système d'actionnement 4 comporte une machine électrique tournante génératrice 6 (dite « génératrice ») et une machine électrique tournante motrice 8 (dite « motrice »), électriquement reliées entre elles, avantageusement par une matrice d'interrupteurs 11 commandée par un dispositif de commande 10.

La génératrice 6 est configurée pour prélever de l'énergie mécanique au niveau de l'arbre d'entraînement, et pour convertir l'énergie mécanique prélevée en énergie électrique.

La motrice 8 est configurée recevoir l'énergie électrique générée par la génératrice 6, et pour convertir l'énergie électrique reçue en énergie mécanique destinée à actionner la pompe de lubrification 2.

De préférence, chacune parmi la génératrice 6 et la motrice 8 est une machine synchrone à aimants permanents ou une machine asynchrone. En particulier, la génératrice 6 est une machine synchrone à aimants permanents ou une machine asynchrone, et la motrice 8 est une machine asynchrone ou un moteur continu sans balais. Par exemple, la génératrice 6 est une machine synchrone à aimants permanents et la motrice 8 est une machine asynchrone.

La génératrice 6 comprend un rotor 12 (dit « premier rotor ») et un stator 14 (dit « premier stator »).

Le premier rotor 12 est mécaniquement couplé à l'arbre d'entraînement au moyen de tout organe mécanique de transmission adapté tel qu'un réducteur.

Le premier stator 14 comporte au moins un enroulement 16, dit « enroulement statorique de sortie », par exemple trois enroulements statoriques de sortie 16.

La motrice 8 comprend un rotor 18 (dit « deuxième rotor ») et un stator 20 (dit « deuxième stator »).

Le deuxième rotor 18 est mécaniquement couplé à la pompe de lubrification 2, directement ou par l'intermédiaire d'au moins un réducteur, pour causer son actionnement.

Le deuxième stator 20 comporte au moins un enroulement 22, dit « enroulement statorique d'entrée », par exemple trois enroulements statoriques d'entrée 22.

L'au moins un enroulement statorique de sortie 16 et l'au moins un enroulement statorique d'entrée 22 sont électriquement reliés entre eux. En d'autres termes, chaque enroulement statorique de sortie 16 est relié à un enroulement statorique d'entrée 22 correspondant sans qu'aucun composant électronique de puissance, tel qu'un transistor ou un thyristor, ne soit agencé entre eux. Avantageusement, chaque enroulement statorique de sortie 16 est relié à un enroulement statorique d'entrée 22 correspondant au moyen d'un interrupteur de la matrice d'interrupteurs 11.

De cette façon, lorsque le premier rotor 12 de la génératrice 6 est entraîné en rotation, il circule un courant entre l'au moins un enroulement statorique de sortie 16 et l'au moins un enroulement statorique d'entrée 22. Un tel courant conduit à la mise en rotation du deuxième rotor 18 de la motrice 8, ce qui actionne la pompe de lubrification 2.

De préférence, le dispositif de commande 10 est configuré pour commander la matrice d'interrupteurs 11 de façon à connecter ou déconnecter électriquement l'au moins un enroulement statorique de sortie 16 et l'au moins un enroulement statorique d'entrée 22 entre eux. En particulier, le dispositif de commande 10 est configuré pour recevoir un signal de commande, par exemple en provenance d'un calculateur de l'aéronef, et pour commander la matrice d'interrupteurs 11 de façon à connecter ou déconnecter entre eux l'au moins un enroulement statorique de sortie 16 et l'au moins un enroulement statorique d'entrée 22 en fonction d'un état du signal de commande.

Selon un autre exemple, le signal de commande est un signal de mesure de vitesse de rotation délivré par un capteur de l'aéronef. Un tel signal de mesure est représentatif de la vitesse de rotation d'un organe rotatif du moteur, de préférence la vitesse de rotation de l'arbre basse pression ou d'une soufflante du moteur. Dans ce cas, le dispositif de commande 10 est configuré pour commander la matrice d'interrupteurs 11 de façon à connecter électriquement l'au moins un enroulement statorique de sortie 16 et l'au moins un enroulement statorique d'entrée 22 entre eux si la valeur de la vitesse de rotation de l'organe rotatif est inférieure ou égale à un seuil prédéterminé. Ce seuil prédéterminé peut correspondre à l'apparition d'une condition dans laquelle au moins une pompe d'un système de lubrification principal ne tourne plus assez vite pour être en mesure d'assurer correctement la lubrification d'une boîte de réduction du moteur, de telle sorte que la pompe de lubrification 2 doit suppléer ce manque en tant que pompe d'un système de lubrification auxiliaire de la boîte de réduction. De préférence, le dispositif de commande 10 est également configuré pour commander la matrice d'interrupteurs 11 de façon à déconnecter électriquement l'au moins un enroulement statorique de sortie 16 et l'au moins un enroulement statorique d'entrée 22 l'un de l'autre si la valeur de la vitesse de rotation de l'organe rotatif est supérieure au seuil prédéterminé.

De cette façon, dans le cas où la pompe de lubrification 2 est une pompe de lubrification auxiliaire, la pompe de lubrification 2 est avantageusement actionnée uniquement lorsqu'une pompe de lubrification principale requiert une assistance, en particulier lors d'une extinction du moteur en vol ou au sol avec une phase d'autorotation de la soufflante du moteur.

A titre d'exemple, la matrice d'interrupteurs 11 comprend un ensemble d'interrupteurs, de préférence des interrupteurs électromécaniques, électriquement reliés, d'une part, à l'au moins un enroulement statorique de sortie 16 et, d'autre part, à l'au moins un enroulement statorique d'entrée 22, l'état passant ou bloqué de chaque interrupteur étant commandé par le dispositif de commande 10.

De préférence, le dispositif de commande 10 comprend un organe analogique de détection 24 configuré pour délivrer un signal de rotation dont l'état est représentatif d'un sens de rotation du premier rotor 12 de la génératrice 6. Un tel signal de rotation forme également un signal de commande du dispositif de commande 10.

Par exemple, l'organe analogique de détection 24 est configuré pour délivrer le signal de rotation en fonction de la valeur prise par la tension aux bornes de l'au moins un enroulement statorique de sortie 16 de la génératrice 6. Dans ce cas, le dispositif de commande 10 est également configuré pour commander la matrice d'interrupteurs 11 de façon à entraîner une inversion de phase au niveau de la motrice 8, c'est-à-dire entraîner une modification de la connexion entre l'au moins un enroulement statorique de sortie 16 et l'au moins un enroulement statorique d'entrée 22 de façon à ce qu'un sens de rotation du deuxième rotor 18 demeure inchangé, quel que soit le sens dans lequel le premier rotor 12 de la génératrice 6 est entraîné en rotation. En d'autres termes, quel que soit le sens dans lequel le premier rotor 12 de la génératrice 6 est entraîné en rotation, le deuxième rotor 18 tourne toujours dans un même sens prédéterminé, de sorte que la pompe de lubrification 2 est également toujours entraînée dans un même sens.

Le recours à l'organe analogique de détection 24 est avantageux, dans la mesure où, en évitant de recourir à un organe en partie ou totalement numérique pour délivrer le signal de rotation, la robustesse du système d'actionnement 4 est renforcée. prédéterminé, de sorte que la pompe de lubrification 2 est également toujours entraînée dans un même sens.

Le recours à l'organe analogique de détection 24 est avantageux, dans la mesure où, en évitant de recourir à un organe en partie ou totalement numérique pour délivrer le signal de rotation, la robustesse du système d'actionnement 4 est renforcée.

## Revendications

1. Système d'actionnement (4) pour une pompe de lubrification (2) d'un moteur d'aéronef, comportant une machine électrique tournante génératrice (6), une machine électrique tournante motrice (8), un dispositif de commande (10) et une matrice d'interrupteurs (11),
la machine électrique tournante génératrice (6) comprenant un premier rotor (12), destiné à être mécaniquement couplé à un arbre du moteur formant un arbre d'entraînement, et un premier stator (14) comprenant au moins un enroulement statorique de sortie (16),
la machine électrique tournante motrice (8) comprenant un deuxième rotor (18), destiné à être mécaniquement couplé à la pompe de lubrification (2) pour son actionnement, et un deuxième stator (20) comprenant au moins un enroulement statorique d'entrée (22),
la matrice d'interrupteurs (11) étant électriquement reliée, d'une part, à l'au moins un enroulement statorique de sortie (16) et, d'autre part, à l'au moins un enroulement statorique d'entrée (22) de façon à électriquement connecter ou déconnecter l'au moins un enroulement statorique de sortie (16) et l'au moins un enroulement statorique d'entrée (22) entre eux en fonction d'un état de la matrice d'interrupteurs (11),
le dispositif de commande (10) étant configuré pour, en fonction d'un état d'un signal de commande, commander la matrice d'interrupteurs (11) de façon à connecter électriquement ou non l'au moins un enroulement statorique de sortie (16) et l'au moins un enroulement statorique d'entrée (22) entre eux,
le dispositif de commande (10) étant configuré en outre pour commander la matrice d'interrupteurs, en fonction d'un sens de rotation du premier rotor (12) de la génératrice (6), afin de connecter l'au moins un enroulement statorique de sortie (16) et l'au moins un enroulement statorique d'entrée (22) entre eux de sorte qu'un sens de rotation du deuxième rotor (18) demeure inchangé, quelque soit le sens dans lequel le premier rotor (12) de la génératrice (6) est entraîné en rotation.

2. Système d'actionnement (4) selon la revendication 1, dans lequel le dispositif de commande (10) comprend un organe analogique de détection (24) configuré pour délivrer un signal de rotation représentatif du sens de rotation du premier rotor (12) de la génératrice (6).

3. Système d'actionnement (4) selon l'une quelconque des revendications 1 ou 2, dans lequel le dispositif de commande (10) est configuré pour recevoir un signal de commande représentatif de la vitesse de rotation d'un organe rotatif du moteur, de préférence de l'arbre d'entraînement, le dispositif de commande (10) étant, en outre, configuré pour commander la matrice d'interrupteurs (11) afin de connecter électriquement l'au moins un enroulement statorique de sortie (16) et l'au moins un enroulement statorique d'entrée (22) entre eux si la valeur de la vitesse de rotation de l'organe rotatif est inférieure ou égale à un seuil prédéterminé et, de préférence, pour déconnecter électriquement l'au moins un enroulement statorique de sortie (16) et l'au moins un enroulement statorique d'entrée (22) l'un de l'autre si la valeur de la vitesse de rotation de l'organe rotatif est supérieure au seuil prédéterminé.

4. Système d'actionnement (4) selon l'une quelconque des revendications 1 à 3, dans lequel la matrice d'interrupteurs (11) comprend au moins un interrupteur électromécanique.

5. Système d'actionnement (4) selon l'une quelconque des revendications 1 à 4, dans lequel la machine électrique tournante génératrice (6) et/ou la machine électrique tournante motrice (8) est une machine synchrone à aimants permanents ou une machine asynchrone.

6. Aéronef embarquant une pompe de lubrification (2) et un système d'actionnement (4) selon l'une quelconque des revendications 1 à 5,
le premier rotor (12) de la machine électrique tournante génératrice (6) étant mécaniquement couplé à un arbre d'un moteur de l'aéronef,
le deuxième rotor (18) de la machine électrique tournante motrice (8) étant mécaniquement couplé à une pompe de lubrification (2) du moteur, pour l'actionnement de la pompe de lubrification (2).

## Patentansprüche

1. Betätigungssystem (4) für eine Schmierpumpe (2) eines Motors eines Flugzeugs, das eine generatorisch drehende elektrische Maschine (6), eine motorisch drehende elektrische Maschine (8), eine Steuervorrichtung (10) und eine Schaltermatrix (11) aufweist,
wobei die generatorisch drehende elektrische Maschine (6) einen ersten Rotor (12) umfasst, der dazu bestimmt ist, mechanisch mit einer Motorwelle gekoppelt zu sein, die eine Antriebswelle bildet, und einen ersten Stator (14), der mindestens eine Ausgangsstatorwicklung (16) umfasst,
wobei die motorisch drehende elektrische Maschine (8) einen zweiten Rotor (18) umfasst, der dazu bestimmt ist, mechanisch mit der Schmierpumpe (2) für deren Betätigung gekoppelt ist, und einen zweiten Stator (20), der mindestens eine Eingangsstatorwicklung (22) umfasst,
wobei die Schaltermatrix (11) einerseits mit der mindestens einen Ausgangsstatorwicklung (16) und andererseits mit der mindestens einen Eingangsstatorwicklung (22) elektrisch verbunden ist, um die mindestens eine Ausgangsstatorwicklung (16) und die mindestens eine Eingangsstatorwicklung (22) in Abhängigkeit von einem Zustand der Schaltermatrix (11) elektrisch miteinander zu verbinden oder zu trennen,
wobei die Steuervorrichtung (10) so eingerichtet ist, dass sie in Abhängigkeit von einem Zustand eines Steuersignals die Schaltermatrix (11) so steuert, dass sie die mindestens eine Ausgangsstatorwicklung (16) und die mindestens eine Eingangsstatorwicklung (22) elektrisch miteinander verbindet oder nicht,
wobei die Steuervorrichtung (10) ferner so eingerichtet ist, dass sie die Schaltermatrix in Abhängigkeit von einer Drehrichtung des ersten Rotors (12) des Generators (6) steuert, um die mindestens eine Ausgangsstatorwicklung (16) und die mindestens eine Eingangsstatorwicklung (22) miteinander zu verbinden, sodass eine Drehrichtung des zweiten Rotors (18) unverändert bleibt, unabhängig davon, in welche Richtung der erste Rotor (12) des Generators (6) rotierend angetrieben wird.

2. Betätigungssystem (4) nach Anspruch 1, wobei die Steuervorrichtung (10) ein analoges Erkennungsorgan (24) umfasst, das so eingerichtet ist, dass es ein Drehsignal liefert, das für die Drehrichtung des ersten Rotors (12) des Generators (6) repräsentativ ist.

3. Betätigungssystem (4) nach einem der Ansprüche 1 oder 2, wobei die Steuervorrichtung (10) so eingerichtet ist, dass sie ein Steuersignal empfängt, das für die Drehzahl eines Drehorgans des Motors, vorzugsweise der Antriebswelle, repräsentativ ist, wobei die Steuervorrichtung (10) ferner so eingerichtet ist, dass sie die Schaltermatrix (11) steuert, um die mindestens eine Ausgangsstatorwicklung (16) und die mindestens eine Eingangsstatorwicklung (22) elektrisch miteinander zu verbinden, wenn der Wert der Drehzahl des Drehorgans kleiner oder gleich einem vorbestimmten Schwellenwert ist, und vorzugsweise, um die mindestens eine Ausgangsstatorwicklung (16) und die mindestens eine Eingangsstatorwicklung (22) elektrisch voneinander zu trennen, wenn der Wert der Drehzahl des Drehorgans größer als der vorbestimmte Schwellenwert ist.

4. Betätigungssystem (4) nach einem der Ansprüche 1 bis 3, wobei die Schaltermatrix (11) mindestens einen elektromechanischen Schalter umfasst.

5. Betätigungssystem (4) nach einem der Ansprüche 1 bis 4, wobei die generatorisch drehende elektrische Maschine (6) und/oder die motorisch drehende elektrische Maschine (8) eine Permanentmagnet-Synchronmaschine oder eine Asynchronmaschine ist.

6. Flugzeug mit einer Schmierpumpe (2) und einem Betätigungssystem (4) nach einem der Ansprüche 1 bis 5,
wobei der erste Rotor (12) der generatorisch drehenden elektrischen Maschine (6) mechanisch mit einer Welle eines Motors des Flugzeugs gekoppelt ist,
wobei der zweite Rotor (18) der motorischen drehenden elektrischen Maschine (8) mechanisch mit einer Schmierpumpe (2) des Motors gekoppelt ist, um die Schmierpumpe (2) zu betätigen.

## Claims

1. An actuation system (4) for a lubrication pump (2) of an aircraft engine, including a generator rotating electric machine (6), a drive rotating electric machine (8), a control device (10) and a matrix of switches (11),
the generator rotating electric machine (6) comprising a first rotor (12), intended to be mechanically coupled to a shaft of the engine forming a drive shaft, and a first stator (14) comprising at least one output stator winding (16),
the drive rotating electric machine (8) comprising a second rotor (18), intended to be mechanically coupled to the lubrication pump (2) for its actuation, and a second stator (20) comprising at least one input stator winding (22),
the matrix of switches (11) being electrically connected, on the one hand, to the at least one output stator winding (16) and, on the other hand, to the at least one input stator winding (22) so as to electrically connect or disconnect the at least one output stator winding (16) and the at least one input stator winding (22) to/from each other according to a state of the matrix of switches (11),
the control device (10) being configured to, according to a state of a control signal, control the matrix of switches (11) so as to electrically connect the at least one output stator winding (16) and the at least one input stator winding (22) to each other or not,
the control device (10) further being configured to control the matrix of switches, according to a direction of rotation of the first rotor (12) of the generator unit (6), in order to connect the at least one output stator winding (16) and the at least one input stator winding (22) to each other so that a direction of rotation of the second rotor (18) remains unchanged, regardless of the direction in which the first rotor (12) of the generator unit (6) is driven in rotation.

2. The actuation system (4) according to claim 1, wherein the control device (10) comprises an analogue detection member (24) configured to deliver a rotation signal representative of the direction of rotation of the first rotor (12) of the generator unit (6).

3. The actuation system (4) according to any of claims 1 or 2, wherein the control device (10) is configured to receive a control signal representative of the speed of rotation of a rotary member of the engine, preferably of the drive shaft, the control device (10) further being configured to control the matrix of switches (11) in order to electrically connect the at least one output stator winding (16) and the at least one input stator winding (22) to each other if the value of the speed of rotation of the rotary member is less than or equal to a predetermined threshold and, preferably, to electrically disconnect the at least one output stator winding (16) and the at least one input stator winding (22) from each other if the value of the speed of rotation of the rotary member is greater than the predetermined threshold.

4. The actuation system (4) according to any of claims 1 to 3, wherein the matrix of switches (11) comprises at least one electromechanical switch.

5. The actuation system (4) according to any of claims 1 to 4, wherein the generator rotating electric machine (6) and/or the drive rotating electric machine (8) is a synchronous machine with permanent magnets or an asynchronous machine.

6. An aircraft carrying a lubrication pump (2) and an actuation system (4) according to any of claims 1 to 5,
the first rotor (12) of the generator rotating electric machine (6) being mechanically coupled to a shaft of an engine of the aircraft,
the second rotor (18) of the drive rotating electric machine (8) being mechanically coupled to a lubrication pump (2) of the engine, for the actuation of the lubrication pump (2).
